**Europäisches Patentamt**

**European Patent Office**

**Office européen des brevets**

(19)

(11) Veröffentlichungsnummer : **0 033 964**
**B1**

(12) **EUROPÄISCHE PATENTSCHRIFT**

(45) Veröffentlichungstag der Patentschrift :
16.02.83

(51) Int. Cl.³ : **F 16 J 15/32**

(21) Anmeldenummer : **81100877.0**

(22) Anmeldetag : **07.02.81**

(54) **Radialwellendichtring.**

(30) Priorität : **07.02.80 US 119631**

(43) Veröffentlichungstag der Anmeldung :
**19.08.81 Patentblatt 81/33**

(45) Bekanntmachung des Hinweises auf die Patenterteilung : **16.02.83 Patentblatt 83/07**

(84) Benannte Vertragsstaaten :
**AT BE CH DE FR GB IT LI NL SE**

(56) Entgegenhaltungen :
**FR A 2 390 647**
**US A 3 254 898**
**US A 3 495 843**

(73) Patentinhaber : **Firma Carl Freudenberg**
**Höhnerweg 2**
**D-6940 Weinheim/Bergstrasse (DE)**

(72) Erfinder : **Gagne, Roger O.**
**115 Morrill Street**
**Gilford, NH 03246 (US)**

(74) Vertreter : **Weissenfeld-Richters, Helga, Dr.**
**Höhnerweg 2**
**D-6940 Weinheim/Bergstrasse (DE)**

Jouve, 18, rue St-Denis, 75001 Paris, France

EP 0 033 964 B1

Radialwellendichtring

Die Erfindung betrifft einen Radialwellendichtring für ein unter hohem Druck stehendes Medium, bestehend aus einem Versteifungsring mit einem winkelförmigen Profil und einem darin eingesetzten Nutring, dessen dynamisch wirkende Dichtlippe von einer Ringwendelfeder gegen die abzudichtende Welle gedrückt und durch einen Stützring vor einer Spaltextrusion geschützt wird, der in einer winkelförmig nach innen geöffneten Aussparung des Nutringes gelagert ist und der unmittelbar durch den in radialer Richtung nach innen weisenden Schenkel des Versteifungsringes abgestützt wird, wobei der Innendurchmesser des Stützringes gerinfügig größer ist als der Außendurchmesser der abgedichteten Welle.

Ein Radialwellendichtring der vorstehend angesprochenen Art ist aus DE-A-26 19 565 bekannt. Der Druck des abzudichtenden Mediums wirkt sich über den elastisch nachgiebigen Werkstoff des Nutringes unmittelbar auf den Stützring aus, und damit ergibt sich eine erhöhte Anpressung gegen den in radialer Richtung nach innen weisenden Schenkel des Versteifungsringes. Die relative Beweglichkeit des Stützringes in bezug auf den Versteifungsring wird hierdurch in erheblichem Maße beeinträchtigt, und der Stützring vermag dadurch den bei Einleitung von Schwingungen auftretenden, radialen Bewegungen der Welle nicht mehr in wünschenswertem Maße zu folgen. Der Innendurchmesser des Stützringes wird dadurch mechanisch aufgeweitet, und es bildet sich ein Spalt zwischen dem Stützring und der Oberfläche der abgedichteten Welle aus, in den der gummielastische Werkstoff des Nutringes unter der Wirkung des Druckes des abzudichtenden Mediums ausgetrieben werden kann. Ein Festklemmen der Welle, verbunden mit einer vorzeitigen Zerstörung des Nutringes, sind hiervon die unvermeidliche Folge.

Zur Vermeidung derartiger, den vorzeitigen Ausfall entsprechender Dichtungen nach sich ziehender Spaltextrusionserscheinungen wurden auch noch andere Vorschläge gemacht, die jedoch in keinem Falle zu befriedigenden Ergebnissen führten.

Der vorliegenden Erfindung liegt demgemäß die Aufgabe zugrunde, eine Hochdruckdichtung mit einem Dichtring aus einem elastomerem Werkstoff zu entwickeln, die ein gutes Betriebsverhalten auch noch beim Auftreten radialer Wellenschwingungen aufweist, beispielsweise bei Schwingungen, die durch einen exzentrischen Lauf der abgedichteten Welle verursacht sind. Die vorgeschlagene Dichtung soll dabei von einfacher Konstruktion sein und in ihren Einbaumaßen denjenigen genormter Radialwellendichtringe entsprechen. Der vorgeschlagene Radialwellendichtring soll außerdem unempfindlich gegenüber äußeren Verschmutzungen sein um eine vielseitige Anwendbarkeit zu gewährleisten.

Zur Lösung dieser Aufgabe wird ein Radialwellendichtring mit den kennzeichnenden Merkmalen des Hauptanspruches vorgeschlagen. Auf vorteilhafte Ausgestaltungen ist in den Unteransprüchen Bezug genommen.

Bei dem vorgeschlagenen Radialwellendichtring weist die Begrenzungsfläche der Aussparung wenigstens in radialer Richtung einen Abstand von dem Stützring auf, wodurch dieser den radialen Bewegungen der abgedichteten Welle frei zu folgen vermag, die Aussparung wird wenigstens teilweise durch das Profil eines Winkelringes umschlossen, der aus einem Hartwerkstoff besteht, und dessen in axialer Richtung weisender Schenkel auf dem in radialer Richtung weisenden Schenkel des Versteifungsringes abgestützt ist. Die Innenabmessungen der winkelförmigen Aussparung weisen dadurch eine definierte Größe auf, die vollkommen unabhängig ist von der Druckbeaufschlagung des Nutringes durch das abgedichtete Medium. Die beim neuen Radialwellendichtring vorhandenen, radialen und axialen Abstände von dem Stützring bleiben dadurch vollständig erhalten, und es ist keinerlei Beeinträchtigung der radialen Beweglichkeit des Stützringes unter Betriebsbedingungen zu befürchten.

Der Stützring umschließt die abgedichtete Welle mit einer engen Spielpassung, und er vermag aufgrund seiner freien, radialen Beweglichkeit den radialen Bewegungen der Welle ohne weiteres zu folgen. Eine nachträgliche Aufweitung des Innendurchmessers tritt nicht ein, und es kommt dadurch auch nicht zu einer Spaltaufweitung zwischen der Welle und dem Stützring, in den der elastomere Werkstoff der Dichtlippe ausgetrieben werden könnte. Die Dichtlippe liegt lediglich mit einer schmälen, in axialer Richtung weisenden Kante an der Stirnfläche des Stützringes und folgt unter Betriebsbedingungen ebenfalls den radialen Bewegungen der Welle. Zwischen der Dichtlippe und zwischen dem Stützring ergeben sich auch beim Auftreten von Wellenschwingungen keinerlei relative Bewegungen, was die Verhinderung von Spaltextrusionserscheinungen begünstigt.

Der Dichtring ist als Nutring ausgebildet, und er liegt auf der Außenseite mit einer statischen Dichtlippe an dem sich in axialer Richtung erstreckenden Schenkel des Versteifungsringes an. Der Winkelring ist fest mit dem Dichtring verbunden, beispielsweise durch Vulkanisation. Er besteht vorzugsweise aus einem metallischen Werkstoff, beispielsweise aus Stahlblech. Die die dynamische Abdichtung gegenüber der Welle bewirkende Dichtlippe weist in radialer Richtung nach innen, und sie wird durch eine aufgelegte Ringwendelfeder gegen diese gepresst. Die Ringwendelfeder ist in einer Nute angeordnet, um eine axiale Verlagerung unter Betriebsbedingungen zu verhindern.

Nach einer bevorzugten Ausführungsform kann der Stützring ein winkelförmiges Profil aufweisen mit einem axialen Schenkel, der sich entlang der Welle bis in den Bereich radial innerhalb des in radialer Richtung nach innen weisenden Schenkels des Winkelringes erstreckt. Die spezifische Flächenpressung bei einer Berührung mit der abgedichteten Welle wird hierdurch vermindert und es ergibt sich dadurch ein verbessertes Verschleißverhalten. Als besonders vorteilhaft hat es sich erwiesen, wenn dabei der sich in axialer Richtung erstreckende Schenkel des Stützringes im vorspringenden Teil kegelig verjüngt ist, und wenn der Innendurchmesser des Nutringes im entsprechenden Bereich bei entsprechender Formgebung einen gleichbleibenden, radialen Abstand von dem Stützring aufweist.

Der Versteifungsring kann auf der Außenseite mit einer Beschichtung aus einen elastomeren Werkstoff versehen sein. Hierdurch ergibt sich eine Verbesserung des Sitzes und eine Verbesserung der statischen Abdichtung gegenüber dem aufnehmenden Gehäuse.

Die Schicht kann über den in radialer Richtung nach innen weisenden Schenkel hinaus nach innen verlängert sein, und in einer Staublippe münden, die gleitend auf der Oberfläche der abgedichteten Welle aufliegt. Das Eindringen von Verschmutzungen in das Innere der Aussparung wird hierdurch verhindert, was wesentlich ist in bezug auf die Gewährleistung einer leichten Beweglichkeit des Stützringes beim Auftreten radialer Wellenbewegungen.

Eine beispielhafte Ausführung des erfindungsgemäßen Radialwellendichtringes ist in der als Anlage beigefügten Zeichnung dargestellt. Sie wird nachfolgend näher erläutert :

Es zeigen :

Figur 1 den Radialwellendichtring in auseinandergezogener Anordnung der einzelnen Komponenten.

Figur 2 den zusammengebauten Radialwellendichtring nach Figur 1 innerhalb geschnittener Darstellung.

Figur 3 den Radialwellendichtring nach den Figuren 1 und 2 innerhalb geschnittener Darstellung nach dem Einbau.

Figur 4 in schematischer Darstellung die elastische Verformung des Nutringes vor und nach dem Einbau.

In der beigefügten Zeichnung ist der erfindungsgemäße Radialwellendichtring allgemein mit 16 bezeichnet. Er dient zur Abdichtung eines unter hohem Druck stehenden Mediums zwischen einer rotierenden oder radiale Bewegungen ausführenden Welle 12 und einem diese umgebenden feststehenden Gehäuse 14, die beide eine gemeinsame, zentrale Achse 13 haben.

Der Radialwellendichtring enthält einen Versteifungsring 18, der so ausgebildet ist, daß er durch eine feste Klemmung sicher und flüssigkeitsdicht im Gehäuse 14 verankert werden kann.

In dem Versteifungsring 18 ist der starre Winkelring 26 angeordnet, der mit der Stirnfläche seines in axialer Richtung weisenden Schenkels an der Innenseite des in radialer Richtung nach innen weisenden Schenkels des Versteifungsringes anliegt. Hierduch wird eine nach innen offene, ringförmige Rille 34 gebildet, die die Welle 12 umgibt.

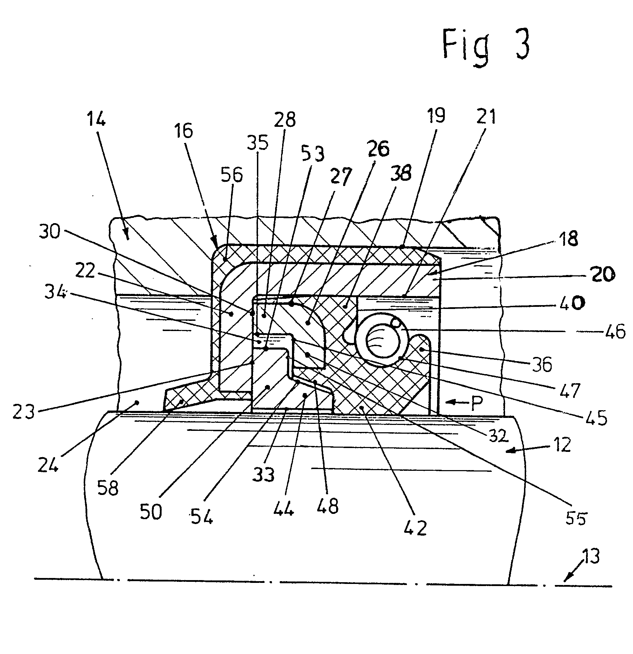

Ein Nutring 36 aus einem elastomeren Werkstoff ist innerhalb des Versteifungsringes angeordnet, und vorzugsweise fest mit dem Winkelring verbunden. Sein Profil umschließt zusammen mit demjenigen des Winkelringes den Stützring 50, dessen Außenumfang einen radialen Abstand vom Innenumfang der Rille 34 aufweist und der dadurch in radialer Richtung frei beweglich ist, um radiale Bewegungen der abgedichteten Welle ausgleichen zu können. Das ursprünglich vorhandene Spiel zwischen dem Innendurchmesser 33 des Stützringes und dem Außendurchmesser der abgedichteten Welle, das so bemessen ist, daß eine Spaltextrusion ausgeschlossen ist, bleibt hierdurch erhalten. Der Druck P, der in Figur 3 durch einen Pfeil gekennzeichnet ist, vermag dadurch den elastomeren Werkstoff des Nutringes 36 nicht in den Zwischenraum zwischen dem Stützring und der abgedichteten Welle auszutreiben.

Der Versteifungsring 18 besteht vorzugsweise aus Metall, und seine zentrale Achse fällt mit derjenigen der Welle 12 zusammen. Er hat einen äußeren, ringförmigen Wandteil 20 mit einer äußeren, zylindrischen Oberfläche 19, die so angepaßt ist, daß sie in das Gehäuse 14 paßt und eine innere zylindrische Oberfläche 21. Der Versteifungsring hat einen radial nach innen weisenden Vorderwandteil 22 mit einer inneren Wandoberfläche 23, die sich radial nach innen senkrecht zur zentralen Achse 13 gegen die Welle 12 erstreckt.

Der Winkelring besteht ebenfalls aus Metall und seine zentrale Achse 13 fällt mit derjenigen der Welle 12 zusammen. Der Winkelring hat einen äußeren, ringförmigen Wandteil 28 mit einer inneren, zylindrischen Oberfläche 35 und einer äußeren, zylindrischen Oberfläche 27, die radial nach innen von der inneren Oberfläche 21 des Versteifungsringes 18 im Abstand angebracht ist, wobei die vordere Endoberfläche 30 an der Vorderwand-Oberfläche 23 des Versteifungsringes 18 anliegt, und ein Hinterwandteil 32, der sich radial nach innen senkrecht zur zentralen Achse gegen die Welle 12 erstreckt und einen Abstand vom Vorderwandteil 22 des Ringes 18 hat, um zwischen den jeweiligen Oberflächen 23, 45 der Ringe 18, 26 eine nach innen offene, ringförmige Nut 34 zu bilden, die die Welle umgibt. Die ringförmige innere Oberfläche des Hinterwandteils 32 hat einen radialen Abstand von der Welle 12. Die zentrale Achse 13 des Nutringes 36 aus einem elastomeren Werkstoff fällt ebenfalls mit derjenigen der Welle 12 zusammen. Der Nutring hat einen äußeren ringförmigen Wandteil 38, der an dem ringförmigen Wandteil 20 des Versteifungsringes 18 anliegt sowie eine radial nach innen gerichtete Dichtlippe 42, die unter einer Vorspannung auf der Welle 12 aufliegt. Der Nutring 36 wird vorzugsweise adhäsiv mit dem Winkelring 26 verbunden, beispielsweise durch Vulkanisation, um mit diesem eine Einheit zu bilden zur Erleichterung der Montage. Die sich in radiale Richtung erstreckende Strinfläche 30 des sich in axialer Richtung erstreckenden Schenkels des Winkelringes 26 liegt an der Druck zugewandten Innenseite des in radialer Richtung nach innen weisenden Schenkels des Versteifungsringes 18 an und wird durch diesen abgestützt.

Der äußere Wandteil 38 des Dichtelementes 36 ist kegelförmig erweitert und liegt durch die sich während des Einbaus in den Versteifungsring 18 ergebende Zusammenpressung unter einer elastischen Vorspannung an dessen Innenumfang an. Durch die Beaufschlagung mit dem abgedichteten Medium ergibt sich eine zusätzliche Anpressung der Oberfläche 39 an die innere Oberfläche 21 des winkelförmigen Versteifungsringes und dadurch neben einer guten Dichtheit ein fester Sitz. Durch die kegelstumpfförmige Verjüngung des Nutringes in Einbaurichtung ist die Montage der beiden Teile mit keinen besonderen Schwierigkeiten verbunden.

Der Nutring 36 weist eine ringförmige, federhaltende Rille 47 auf, die radial außerhalb der Dichtlippe angeordnet ist und in der eine fortlaufende Spiralfeder 46 montiert ist. Hierdurch wird eine radial nach innen gerichtete Kraft geschaffen, durch die die Dichtlippe 42 gegen die Welle 12 angepreßt wird.

Die axiale Länge der ringförmigen Rille 34 (gemessen zwischen Flächen 23, 45) ist geringfügig größer als die axiale Länge (gemessen zwischen Flächen 51, 55) des in radialer Richtung vorspringenden Teiles des Profils des Stützringes 50. Dieser liegt auf der Niederdruckseite unmittelbar an dem in radialer Richtung nach innen weisenden Schenkel des Versteifungsringes 18 an. Der Stützring 50 besteht aus einem starren Material, beispielsweise aus Kunststoff, und er ist so in der Rille 34 montiert und an deren Profil angepaßt, daß er sich in radialer Richtung frei zu bewegen vermag. Diese wichtige Voraussetzung muß auch dann erfüllt sein, wenn der Stützring sich durch eine axiale, kegelige Verlängerung 44 bis in den Bereich radiale innerhalb das nach innen vorspringenden Schenkels des Winkelringes erstreckt, d. h. das Profil des Nutringes muß in diesem Falle im genannten Bereich entsprechend ausgebildet sein und einen Abstand von dem Vorsprung haben.

Die zylindrische innere Oberfläche 35 des Winkelringes 26 hat einen radialen Abstand von ihrem Gegenstück, der zylindrischen Außenfläche 53 des Stützringes 50. Die Kegelstumpfkonischen Oberflächen 48 und 54 des Nutringes 36 bzw. des Stützringes 50 sind auch mit einem radialen Abstand von einander angeordnet. Damit wird die radiale Bewegung des Stützringes 50 erlaubt, um jede relative Exzentrizität zwischen der Welle 13 und dem Gehäuse 14 auszugleichen.

Der Versteifungsring 18 ist auf der Außenseite mit einer Schicht 56 aus einem elastomeren Material versehen, die so geformt ist, daß sie von umgebenden, feststehenden Gehäuse 14 aufgenommen wird. Das elastomere Material 56 gleicht nicht perfekte Dimensionen aus, wenn beispielsweise die Wellendichtung 16 einen äußeren Durchmesser hat, der kleiner ist als die Herstellungsspezifikationen vorschreiben oder wenn das Gehäuse 14 einen inneren Durchmesser hat, der größer ist als die Herstellungsspezifikationen, in dem es eine normierte Wellendichtung 16 schafft, deren äußerer Durchmesser immer größer ist als der innere Durchmesser des Gehäuses 14. Der vorgeschlagene Wellendichtring wird folglich genau mit einem Festsitz in das Gehäuse 14 passen, sodaß er dadurch sicher gehalten wird, ohne Rücksicht auf nicht perfekte Dimensionen. Das elastomere Material 56 mündet in einer Abstreiflippe 58, die auf der Welle 12 aufliegt und das Eindringen von Verschmutzungen von der Niederdruckseite 24 in das Innere des Dichtringes verhindert.

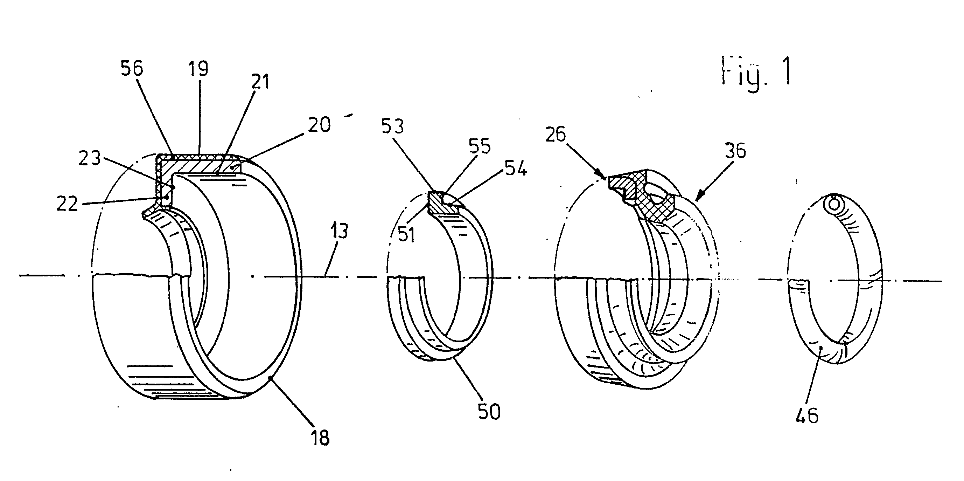

Bei der Montage des Wellendichtringes 16 zu einer Einheit, wie sie am besten in Figur 1 gezeigt wird, wird der Stützring 50 in den winkelförmigen Versteifungsring 18 eingelegt, sodaß seine Seitenoberfläche 51 an der Oberfläche 23 des Versteifungsringes 18 angrenzt. Der normierte Nutring 36 aus elastomeren Werkstoff und der starre Winkelring 26 werden als nächstes in den Versteifungsring 18 eingefügt. Dabei kommt die vordere Endfläche 30 des Winkelringes auf der Druck zugewandten Seite des radial nach innen weisenden Schenkels des Versteifungsringes 18 zum Anliegen, und der äußere, ringförmige Wandteil 38 des Nutringes legt sich an den äußeren, ringförmigen Wandteil 20 des Versteifungsringes 18 an mit einem Festsitz. Die kegelstumpfkonische Gestalt dieses normierten Körpers macht es leichter, ihn in den Versteifungsring einzufügen. Die fortlaufende Spiralfeder 46 wird als letztes in diese ringförmige, federhaltende Rille 47 des Dichtelementes 36 eingelegt. Bei der Installation muß darauf geachtet werden, daß die Abstreiflippe 58 so orientiert ist, daß sie zur Niederdruckseite hinweist.

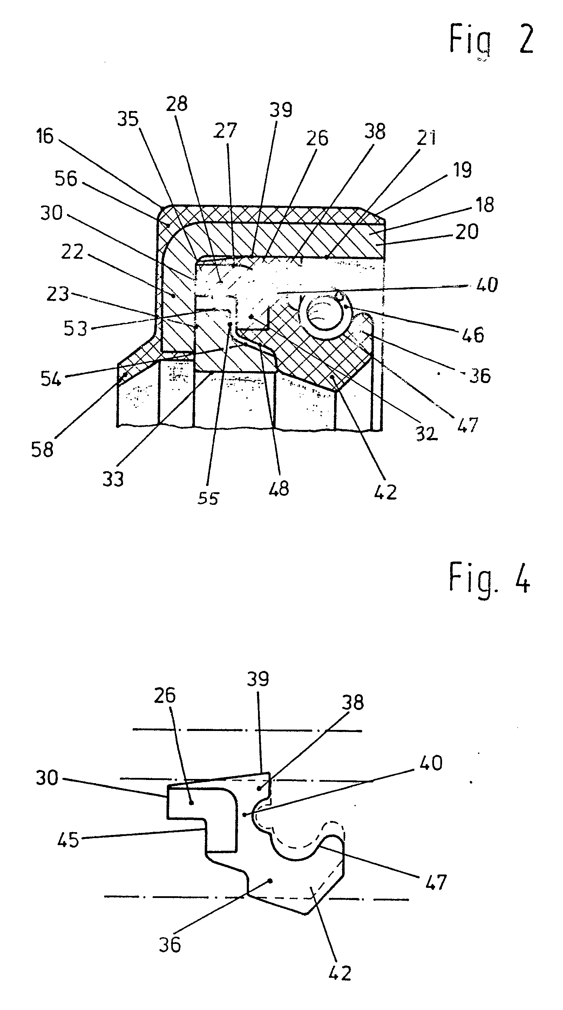

Beim Betrieb bewegen sich die elastomere Dichtlippe 42 und die Abstreiflippe 58 radial nach außen, bezogen auf ihre zentrale Achse 13. Die Figuren 2 und 3 bzw. die Figur 4 machen die Deformation des Nutringes deutlich.

Die radiale Bewegung der Dichtlippe 42 nach außen wird schematisch in Figur 4 wiedergegeben. Die durchgezogene Linie zeigt die Dichtlippe 42 vor dem Einbau, die gepunktete Linie zeigt die Dichtlippe 42 im Betriebszustand.

Die fortlaufende Spiralfeder 46 schafft eine radial nach innen gerichtete Kraft, die die Dichtlippe 42 in Kontakt mit der Welle 12 vorspannt, und dadurch das Ausströmen von Flüssigkeit von der Hochdruckseite P entlang der Welle verhindert. Wenn die Welle 12 rotiert oder schwingt, verhindert der von der Welle geführte Stützring 50 die Druckextrusion des elastomeren Werkstoffs 36 in Richtung der Niederdruckseite 24 durch den Druck P. Außerdem bewegt sich das Stützelement 50 radial innerhalb der ringförmigen Rille 34, um jegliche relative Exzentrizität zwischen der rotierenden Welle 12 und dem Gehäuse 14 zu verhindern, während sie die Druckextrusion des Dichtelementes 36 entlang der Welle 12 verhindert. Die Abstreiflippe 58, die auf der Welle 12 auf der Niederdruckseite der Dichtung 16 aufliegt, hindert Verschmutzungen am Wandern in das Innere des Wellendichtringes 16.

**Ansprüche**

1. Radialwellendichtring für ein unter hohem Druck stehendes Medium, bestehend aus einem Versteifungsring mit einem winkelförmigen Profil und einem darin eingesetzten Nutring (36), dessen dynamisch wirkende Dichtlippe (42) von einer Ringwendelfeder (46) gegen die abzudichtende Welle (12) gedrückt und durch einen Stützring (50) vor Spaltextrusionen geschützt wird, der in einer winkelförmig nach innen geöffneten Aussparung (34) des Nutringes gelagert ist und an dem radial nach innen weisenden Schenkel (22) des Versteifungsringes anliegt, wobei der Innendurchmesser des Stützringes geringfügig größer ausgebildet ist als der Außendurchmesser der abgedichteten Welle, dadurch gekennzeichnet, daß die Begrenzungsflächen (35, 48) der Aussparung wenigstens in radialer Richtung einen Abstand von dem Stützring (50) aufweisen, so daß dieser den radialen Bewegungen der abgedichteten Welle frei zu folgen vermag, daß die Aussparung (34) wenigstens teilweise von dem Profil eines Winkelringes (26) umschlossen wird, der aus einem Hartwerkstoff besteht, und dessen in axialer Richtung weisender Schenkel (28) auf dem in radialer Richtung nach innen weisenden Schenkel (22) des Versteifungsringes abgestützt ist.

2. Radialwellendichtring nach Anspruch 1, dadurch gekennzeichnet, daß der Stützring (50) ein winkelförmiges Profil aufweist mit einem axialen Schenkel (44), daß sich entlang der Welle bis in einen Bereich radial innerhalb des in radialer Richtung nach innen weisenden Schenkels (32) des Winkelringes (26) erstreckt.

3. Radialwellendichtring nach Anspruch 2, dadurch gekennzeichnet, daß der sich in axialer Richtung erstreckende Schenkel (44) des Stützringes (50) im vorspringenden Teil kegelig verjüngt ist und daß das Profil des Nutringes den vorspringenden Teil in einem radialen Abstand umgibt.

4. Radialwellendichtring nach Anspruch 1-3, dadurch gekennzeichnet, daß der in radialer Richtung nach innen weisende Schenkel (22) Versteijungsringes (18) mit einer Staublippe (58) versehen ist.

**Claims**

1. A radial shaft sealing ring for a medium under a high pressure, consisting of a stiffening ring with an angular profile and a grooved ring (36) which is inserted therein and the dynamically acting sealing lip (42) of which is forced by an annular coil spring (46) against the shaft (12) to be sealed and is protected by a support ring (50) from extrusions through the gap, which support ring is mounted in an angular, inward-facing recess (34) of the grooved ring and with which the radially inward-pointing leg (22) of the stiffening ring is in contact, the internal diameter of the support ring being slightly larger than the external diameter of the sealed shaft, characterised in that the boundary surfaces (35, 48) of the recess are, at least in the radial direction, at such a distance from the support ring (50) that the latter is able to follow the radial movements of the sealed shaft freely, that the recess (34) is at least partially enclosed by the profile of an angle ring (26) consisting of a hard material, and that the leg (28) of the angle ring, pointing in the axial direction, is supported on the leg (22) of the stiffening ring, pointing radially inwards.

2. A radial shaft sealing ring according to Claim 1, characterised in that the support ring (50) has an angular profile with an axial leg (44) which extends along the shaft up to a region radially inwards of the leg (32) of the angle ring (26), pointing inwards in the radial direction.

3. A radial shaft sealing ring according to Claim 2, characterised in that the leg (44) of the support ring (50), extending in the axial direction, tapers conically in the projecting part, and that the profile of the grooved ring surrounds the projecting part at a radial distance.

4. A radial shaft sealing ring according to any of claims 1-3, characterised in that the leg (22) of the stiffening ring (18), pointing inwards in the radial direction, is provided with a dust lip (58).

**Revendications**

1. Joint d'étanchéité de type radial pour un fluide sous haute pression, constitué par une bague raidisseuse à profil en équerre et contenant une couronne emboutie (36), dont la lèvre d'étanchéité dynamique (42) est appliquée par un ressort-bague hélicoïdal (46) sur l'arbre (12) à rendre étanche et protégée contre l'extrusion par une bague d'appui (50), qui est logée dans un évidement (34) ouvert de la couronne emboutie et s'applique sur la branche (22) radiale vers l'intérieur de la bague raidisseuse, le diamètre intérieur de la bague d'appui étant légèrement supérieur au diamètre extérieur de l'arbre à rendre étanche, ledit joint d'étanchéité étant caractérisé en ce que les faces (35, 48) délimitant l'évidement présentent, dans le sens radial au moins, une distance à la bague d'appui (50), qui peut ainsi suivre librement les mouvements radiaux de l'arbre rendu étanche ; et l'évidement (34) est entouré partiellement au moins par le profil d'une bague de butée (26), réalisée dans un matériau dur et dont la branche (28) axiale prend appui sur la branche (22) de la bague raidisseuse radiale vers l'intérieur.

2. Joint d'étanchéité de type radial selon revendication 1, caractérisé en ce que la bague d'appui (50) présente un profil en équerre avec une branche (44) axiale qui s'étend le long de l'arbre, jusque dans une zone radiale située dans la branche (32) de la bague de butée (26) radiale vers l'intérieur.

3. Joint d'étanchéité de type radial selon revendication 2, caractérisé en ce que la branche (44) axiale de la bague d'appui (50) est conique sur la partie en saillie ; et le profil de la couronne emboutie entoure la partie en saillie à distance radiale.

4. Joint d'étanchéité de type radial selon revendications 1 à 3, caractérisé en ce que la branche (22) radiale vers l'intérieur de la bague raidisseuse (18) est munie d'une lèvre antipoussière (58).

Fig. 1

Fig 2

Fig. 4

# Fig 3